# EUROPÄISCHE PATENTSCHRIFT

(11) **EP 3 553 804 B1**
(45) Veröffentlichungstag und Bekanntmachung des Hinweises auf die Patenterteilung: **24.03.2021**
(21) Anmeldenummer: 18166686.8
(22) Anmeldetag: 10.04.2018
(51) Int. Cl.: H01H 3/26, H01H 33/36, H02B 13/035

(54) **HOCHSPANNUNGS - ODER MITTELSPANNUNGSANLAGE**
HIGH VOLTAGE OR MEDIUM VOLTAGE INSTALLATION
INSTALLATION HAUTE TENSION OU MOYENNE TENSION

(43) Veröffentlichungstag der Anmeldung: 16.10.2019
(73) Patentinhaber: Rail Power Systems GmbH, 81373 München (DE)
(72) Erfinder: Schmalz, Matthias, 63584 Gründau (DE)
(74) Vertreter: Oppermann, Frank

(56) Entgegenhaltungen:
- EP-A1- 2 346 055
- DE-A1- 3 431 252
- DE-A1-102007 004 950
- DE-T2- 69 628 673

## Beschreibung

Die Erfindung betrifft eine Hochspannungs- oder Mittelspannungs-Schaltanlage, mit mindestens einer Schalteinheit, die einen Drehschalter und eine Antriebseinheit zum Drehen des Drehschalters aufweist, wobei die Antriebeinheit einen Antriebsmotor aufweist.

Hochspannungs- und Mittelspannungs-Schaltanlagen können unterschiedliche Schaltgeräte umfassen, zu denen beispielsweise Leistungsschalter, Erdungsschalter und Trennschalter zählen, die unterschiedliche Schaltstellungen einnehmen können. Ein Leistungsschalter kann ein- oder ausgeschaltet sein, ein Erdungsschalter kann eine Trenn- oder Erdstellung und ein Trennschalter eine Betriebs- oder Erdstellung einnehmen. Diese Schaltgeräte können daher jeweils zwei Schaltstellungen einnehmen.

Es sind auch kombinierte Trenn-Erdungsschalter bekannt, die drei unterschiedliche Schaltstellungen einnehmen können, d.h. eine Betriebsstellung, Trennstellung und Erdstellung. Schaltgeräte dieser Bauart werden auch als Dreistellungsschalter bezeichnet. Sonderschalter wie Fünfstellungsschalter können fünf Schaltstellungen einnehmen, d.h. neben einer Betriebs- und Trennstellung noch verschiedene Erdstellungen. In einer Schaltanlage kann ein Fünfstellungsschalter den Kabelabgang erden, die Sammelschiene erden oder Kabelabgang und Sammelschiene erden.

Die DE 10 2007 004 950 A1 beschreibt eine Schaltanlage, die einen Leistungsschalter oder Lasttrennschalter, einen Trennschalter sowie einen Erdungsschalter umfasst, wobei die Schalter eine bauliche Einheit bilden. Der bekannte Schalteinheit zeichnet sich durch geringe Trennstreckenlängen und einen besonders kompakten Aufbau aus. Die Schalteinheit ist als Drehschalter ausgebildet, der fünf Schaltstellungen einnehmen kann. In einer Drehstellung des Drehschalters kann eine elektrische Verbindung zwischen den Anschlusskontakten des Leistungsschalters oder Lastschalters und des Erdungsschalters hergestellt werden, in einer Drehstellung kann eine elektrische Verbindung zwischen den Anschlusskontakten des Leistungsschalters oder Lastschalters, des Trennschalters und des Erdungsschalters unterbrochen werden, in einer Drehstellung kann eine elektrische Verbindung zwischen den Anschlusskontakten des Leistungsschalters oder Lastschalters und des Trennschalters hergestellt werden, in einer Drehstellung kann eine elektrische Verbindung zwischen den Anschlusskontakten des Trennschalters und des Erdungsschalters hergestellt werden und in einer Drehstellung kann eine elektrische Verbindung zwischen den Anschlusskontakten des Leistungsschalters oder Lastschalters, des Erdungsschalters und des Trennschalters hergestellt werden. Der Drehschalter weist eine Schaltkontakt-Anordnung auf, die um eine zentrale Achse drehbar ist. Um eine derartige Schalteinheit von einer Leitstelle bedienen zu können, ist eine Antriebseinheit erforderlich. Ein Antrieb zum Drehen der Schaltkontakt-Anordnung ist in der DE 10 2007 004 950 A1 aber nicht beschrieben.

An die Antriebseinheit einer elektrischen Schalteinheit der oben genannten Bauart werden in der Praxis sehr hohe Anforderungen gestellt. Die Antriebseinheit sollte mit hoher Zuverlässigkeit über einen langen Zeitraum betrieben werden können. Dabei muss sichergestellt sein, dass die Schaltkontakt-Anordnung des Drehschalters die vorgegebenen Drehstellungen einnimmt, in denen die Kontakte der Schaltkontakt-Anordnung exakt auf die entsprechenden Kontakte der einzelnen Schalter ausgerichtet sind.

Die DE 34 31 252 A1 beschreibt eine Antriebseinheit (Schalterantrieb), die derart ausgebildet ist, dass ein Drehschalter beim Betrieb des Antriebsmotors der Antriebseinheit eine Mehrzahl von vorgegebenen Schaltstellungen einnimmt. Die Antriebseinheit weist elektrische Schaltorgane (Mikroschalter) und einen drehbaren Körper auf, der mit Betätigungselementen zum Betätigen der Schaltorgane zusammenwirkt. Der drehbare Körper ist derart ausgebildet, dass das Betätigungselement in vorgegebenen Drehstellungen des drehbaren Körpers, die vorgegebenen Schaltstellungen eines Drehschalters entsprechen, mit dem drehbaren Körper im Eingriff ist, so dass das Betätigungselement eine erste Stellung einnimmt, in der das Schaltorgan einen ersten Schaltzustand einnimmt, und außerhalb der vorgegebenen Drehstellungen des drehbaren Körpers, mit dem drehbaren Körper außer Eingriff ist, so dass das Betätigungselement eine zweite Stellung einnimmt, in der das Schaltorgan einen zweiten Schaltzustand einnimmt. Der drehbare Körper ist Teil eines Getriebes, das eine Betätigung eines Drehschalters mit einer hohen Schaltgeschwindigkeit bei einer weichen Einleitung und Beendigung der Schaltvorgänge erlaubt.

Aus der EP 2 346 055 A1 ist eine Antriebseinheit für eine Hochspannungs- oder Mittelspannungs-Schaltanlage bekannt, bei der der drehbare Körper eine Nockenscheibe ist, von der mehrere Mikroschalter betätigt werden, mit denen die Stromversorgung des Elektromotors der Antriebeinheit unterbrochen werden kann.

Die DE 696 28 673 T2 beschreibt eine Betätigungseinrichtung zur Betätigung einer elektrischen Schalteinrichtung, die über ein Betätigungsrad verfügt, mit der mehrere Mikroschalter betätigt werden. Ein Schalter definiert eine Anfangsstellung des Betätigungsrads, während die anderen Schalter Endstellungen für eine Bewegung im Uhrzeigersinn bzw. entgegen dem Uhrzeigersinn des Betätigungsrads definieren.

Der Erfindung liegt die Aufgabe zugrunde, eine Hochspannungs- oder Mittelspannungs-Schaltanlage mit einer Schalteinheit zu schaffen, die einen kompakten Aufbau hat und mit hoher Zuverlässigkeit über einen möglichst langen Zeitraum weitgehend wartungsfrei betrieben werden kann, insbesondere eine Antriebseinheit für eine Schalteinheit einer Hochspannungs- oder Mittelspannungs-Schaltanlage zu schaffen, die einen weitgehend wartungsfreien Betrieb einer Schalteinheit mit hoher Zuverlässigkeit über einen längeren Zeitraum erlaubt.

Die Lösung dieser Aufgabe erfolgt erfindungsgemäß mit den Merkmalen des Patentanspruchs 1. Die Gegenstände der abhängigen Ansprüche betreffen vorteilhafte Ausführungsformen der Erfindung.

Die erfindungsgemäße Hochspannungs- oder Mittelspannungs-Schaltanlage umfasst mindestens eine Schalteinheit, die einen Drehschalter und eine Antriebseinheit zum

Drehen des Drehschalters aufweist, wobei die Antriebeinheit einen Antriebsmotor aufweist.

Die erfindungsgemäße Antriebseinheit umfasst eine Ansteuerungseinheit zur Ansteuerung des Antriebsmotors, das derart ausgebildet ist, dass der Drehschalter beim Betrieb des Antriebsmotors eine Mehrzahl von vorgegebenen Schaltstellungen einnimmt. Die Ansteuerungseinheit der erfindungsgemäßen Antriebseinheit weist ein Schaltorgan zum Ein- bzw. Ausschalten des Antriebsmotors und einen drehbaren Körper sowie ein mit dem drehbaren Körper zusammenwirkendes Betätigungselement zum Betätigen des Schaltorgans auf.

Der Antriebsmotor ist vorzugsweise ein elektrischer Antriebsmotor und das Schaltorgan ein elektrischer Schalter. Der Antriebsstrang umfasst vorzugsweise mindestens ein Getriebe, so dass der Elektromotor das zur Betätigung der Schalteinheit erforderliche Drehmoment aufbringen kann. Anstelle eines elektrischen Antriebs kann aber grundsätzlich auch ein pneumatischer oder hydraulischer Antrieb vorgesehen sein. Bei einer derartigen Ausführungsform kann das Schaltorgan ein Ventil sein.

Der drehbare Körper ist derart ausgebildet, dass das Betätigungselement in vorgegebenen Drehstellungen des drehbaren Körpers, die den vorgegebenen Schaltstellungen des Drehschalters entsprechen, mit dem drehbaren Körper im Eingriff ist, so dass das Betätigungselement eine erste Stellung einnimmt, in der das Schaltorgan einen ersten Schaltzustand einnimmt, und außerhalb der vorgegebenen Drehstellungen des drehbaren Körpers, mit dem drehbaren Körper außer Eingriff ist, so dass das Betätigungselement eine zweite Stellung einnimmt, in der das Schaltorgan einen zweiten Schaltzustand einnimmt.

Das Schaltorgan, vorzugsweise der elektrische Schalter, kann zum Unterbrechen eines Stromkreises dienen, der den Elektromotor umfasst. Der erste Schaltzustand ist vorzugsweise ein Schaltzustand, in dem der elektrische Schalter, geöffnet ist, so dass der Antriebsmotor ausgeschaltet ist. In dem zweiten Schaltzustand ist das Schaltorgan vorzugsweise geschlossen, so dass der Antriebsmotor eingeschaltet ist. Die Motorsteuerung kann aber auch ein Einschalten des Motors bei geöffnetem Schalter bzw. Ausschalten des Motors bei geschlossenem Schalter vorsehen.

Das Betätigungselement und der Schalter stellen zusammen mit dem drehbaren Körper sicher, dass der Motor nur in bestimmten Drehstellungen, die bestimmten Schaltstellungen der Schalteinheit entsprechen, ein- bzw. ausgeschaltet wird, so dass die unterschiedlichen Schaltstellungen mit hoher Genauigkeit angefahren werden können.

Mit der obigen Anordnung kann eine Motorsteuerung vorgesehen werden, bei der der Elektromotor ausgeschaltet ist, solange das Betätigungselement mit dem drehbaren Körper im Eingriff ist. Wenn das Betätigungselement mit dem drehbaren Körper außer Eingriff ist, wird der Drehschalter von dem Elektromotor solange gedreht bis das Betätigungselement mit dem drehbaren Körper wieder im Eingriff ist. Durch die besondere Ausbildung des drehbaren Körpers können also die vorgegebenen Schaltstellungen definiert werden.

Die erfindungsgemäße Schaltanlage sieht vor, dass die Ansteuerungseinheit eine Freigabeeinheit zum Freigeben des Betätigungselements des Schaltorgangs aufweist, wobei die Freigabeeinheit derart ausgebildet ist, dass das Betätigungselement aus einer Position, in der das Betätigungselement mit dem drehbaren Körper im Eingriff ist, in eine Position gebracht werden kann, in der das Betätigungselement mit dem drehbaren Körper außer Eingriff ist.

Die Ansteuerungseinheit der Schalteinheit ist derart ausgebildet, dass zum Drehen des Drehschalters aus einer Schaltstellung in eine andere Schaltstellung die Freigabeeinheit angesteuert wird, wodurch das Betätigungselement des Schaltorgangs mit dem drehbaren Körper außer Eingriff gebracht wird, so dass der Antriebsmotor eingeschaltet wird, wobei der Drehschalter von dem Antriebsmotor solange gedreht wird bis das Betätigungselement des Schaltorgans mit dem drehbaren Körper in Eingriff kommt, so dass der Antriebsmotor ausgeschaltet wird.

Die Freigabeeinheit erlaubt somit die Einleitung eines Schaltvorgangs, wobei der Drehschalter sich nur solange drehen kann, bis eine andere vorgegebene Schaltstellung erreicht ist, in der das Betätigungselement wieder mit dem drehbaren Körper in Eingriff kommt, wodurch der Antriebsmotor wieder ausgeschaltet wird.

Der drehbare Körper kann unterschiedlich ausgebildet sein. Allein entscheidend ist, dass das Betätigungselement nur in vorgegebenen Drehstellungen, die den Schaltstellungen des Drehschalters entsprechen, mit dem drehbaren Körper im Eingriff ist.

Eine bevorzugte Ausführungsform sieht vor, dass der drehbare Körper eine Scheibe ist, die auf einer drehbar gelagerten Abtriebswelle der Antriebseinheit sitzt. Bei einer besonders bevorzugten Ausführungsform weist die Scheibe an der Umfangsfläche umfangsmäßig verteilt angeordnete Ausnehmungen auf, und das Betätigungselement des Schaltorgans ist als eine Klinke ausgebildet, die in den vorgegebenen Drehstellungen der Scheibe, die den vorgegebenen Schaltstellungen entsprechen, in die Ausnehmungen greift. Die Ausnehmungen brauchen aber nicht an der Umfangsfläche der Scheibe vorgesehen sein, sondern können auch an einer oder beiden Seitenflächen vorgesehen sein. Unter Ausnehmungen werden in diesem Zusammenhang sämtliche Ausbildungen der Scheibe verstanden, die einen Eingriff eines anderen Teils ermöglichen, beispielsweise Ausklinkungen, Verzahnungen, Löcher, Bohrungen etc.

Zur Erfassung der Drehstellung des drehbaren Körpers, vorzugsweise der Scheibe, weist die Ansteuerungseinheit vorzugsweise eine Positionserfassungs-Einrichtung mit einer Mehrzahl von Schaltstellung-Tastelementen auf. Der drehbare Körper ist derart ausgebildet ist, dass in den vorgegebenen Drehstellungen des drehbaren Körpers, die den vorgegebenen Schaltstellungen des Drehschalters entsprechen, in Abhängigkeit von der Drehstellung einzelne Tastelemente mit dem drehbaren Körper im Eingriff sind. Folglich erlauben die Tastelemente die Erfassung einer Kodierung für die unterschiedlichen Schaltstellungen, wobei jedes Tastelement einen binären Zustand erkennen kann, d.h. im Eingriff oder außer Eingriff mit der Scheibe ist. Die Positionserfassungs-Einrichtung kann von den Schaltstellung-Tastelementen betätigbare elektrische Schalter oder Taster aufweisen, die von den Tastelementen geöffnet bzw. geschlossen werden, so dass die Erfassung der Position mit einer elektrischen Auswerteschaltung auf einfache Weise erfolgen kann.

Bei einer besonders bevorzugten Ausführungsform weist die Scheibe an einer Seitenfläche umfangsmäßig verteilt angeordnete Ausnehmungen auf, wobei die Schaltstellung-Tastelemente in den vorgegebenen Drehstellungen der Scheibe, die den vorgegebenen Schaltstellungen des Drehschalters entsprechen, in die entsprechenden Ausnehmungen greifen. Unter Ausnehmungen werden in diesem Zusammenhang wieder sämtliche Ausbildungen der Scheibe verstanden, die einen Eingriff eines anderen Teils ermöglichen, beispielsweise Ausklinkungen, Verzahnungen, Löcher, Bohrungen etc.

Zum Schutz der Betriebsmittel gegen Fehlbedienung und zur Erhöhung der Sicherheit bei einer Störung kann die Ansteuerungseinheit eine Endstellung-Schalteinrichtung aufweisen, die ein Weiterdrehen des Drehschalters auf jeden Fall verhindert, wenn die Antriebseinheit nach der Freigabe des Betätigungselements nicht in der gewünschten Drehstellung dadurch angehalten, dass das zuvor freigegebene Betätigungselement wieder mit dem drehbaren Körper in Eingriff kommt, so dass der Antriebsmotor abgeschaltet wird. Die Endstellung-Schalteinrichtung kann für jede Endstellung ein Endstellung-Tastelement aufweisen, wobei der drehbare Körper derart ausgebildet ist, dass in einer vorgegebenen Endstellung das Tastelement mit dem drehbaren Körper im Eingriff ist. Die Scheibe weist vorzugsweise an einer Seitenfläche umfangsmäßig verteilt angeordnete Ausnehmungen auf, wobei die Endstellung-Schalteinrichtung von den Endstellung-Tastelementen betätigbare Schalter oder Taster aufweist. Diese Schalter können in den Stromkreis geschaltet sein, der den elektrischen Antrieb umfasst, so dass der Antrieb in der Endstellung ausgeschaltet wird. Die Endstellung kann in der Drehrichtung der Scheibe unmittelbar hinter der Drehstellung liegen, die der Schaltstellung des Drehschalters entspricht, so dass der Motor sofort ausgeschaltet wird.

Die Antriebseinheit und die Schalteinheit können in der Schaltanlage räumlich voneinander getrennte Baugruppen (Module) bilden. Die Kopplung des drehbaren Körpers an den Drehschalter der Schalteinheit kann mit einem Zugmittelgetriebe oder mittels Lenkern oder Hebeln erfolgen. Zur Übertragung der relativ hohen Drehmomente, die zum Schalten von Schaltgeräten mit Vakuumschaltkammern erforderlich sind, kann die Abtriebswelle der Antriebseinheit beispielsweise mit einem Zugmittelgetriebe, vorzugsweise einer Kette oder Antriebswelle, mit einer Antriebswelle verbunden sein, die mit einer um eine zentrale Achse drehbaren Schaltkontakt-Anordnung des Drehschalters verbunden ist.

Der erfindungsgemäße Antrieb kann für die unterschiedlichsten Schalteinheiten, die unterschiedliche Schaltgeräte aufweisen können, Verwendung finden, um in den vorgegebenen Drehstellungen des drehbaren Körpers, die den vorgegebenen Schaltstellungen des Drehschalters entsprechen, elektrische Verbindungen beispielsweise zwischen Kontakten eines Leistungsschalters oder Lastschalters, eines Trennschalters und eines Erdungsschalters herzustellen.

Der Drehschalter der Schalteinheit kann derart ausgebildet sein, dass in einer Drehstellung eine elektrische Verbindung zwischen den Anschlusskontakten des Leistungsschalters oder Lastschalters und des Erdungsschalters hergestellt ist, und/oder in einer Drehstellung eine elektrische Verbindung zwischen den Anschlusskontakten des Leistungsschalters oder Lastschalters, des Trennschalters und des Erdungsschalters unterbrochen ist, und/oder in einer Drehstellung eine elektrische Verbindung zwischen den Anschlusskontakten des Leistungsschalters oder Lastschalters und des Trennschalters hergestellt ist, und/oder in einer Drehstellung eine elektrische Verbindung zwischen den Anschlusskontakten des Trennschalters und des Erdungsschalters hergestellt ist, und/oder in einer Drehstellung eine elektrische Verbindung zwischen den Anschlusskontakten des Leistungsschalters oder Lastschalters, des Erdungsschalters und des Trennschalters hergestellt ist. Die Schalteinheit kann beispielsweise ein Dreistellungsschalter oder ein Fünfstellungsschalter sein. Beispielsweise kann die Antriebseinheit zum Antrieb der als "Zentralschalter" bezeichneten Schaltkontakt-Anordnung der elektrischen Schaltanlage verwendet werden, die in der DE 10 2007 004 950 A1 beschrieben ist.

Nachfolgend werden zwei Ausführungsbeispiele der Erfindung unter Bezugnahme auf die Zeichnungen im Einzelnen beschreiben.

Es zeigen:
- Fig. 1A: eine erste Schaltstellung der Schalteinheit der Hochspannungs- oder Mittelspannungs-Schaltanlage,
- Fig. 1B: eine zweite Schaltstellung der Schalteinheit der Hochspannungs- oder Mittelspannungs-Schaltanlage,
- Fig. 1C: eine dritte Schaltstellung der Schalteinheit der Hochspannungs- oder Mittelspannungs-Schaltanlage,
- Fig. 1D: eine vierte Schaltstellung der Schalteinheit der Hochspannungs- oder Mittelspannungs-Schaltanlage,
- Fig. 1E: eine fünfte Schaltstellung der Schalteinheit der Hochspannungs- oder Mittelspannungs-Schaltanlage,
- Fig. 2: die Antriebseinheit einer ersten Ausführungsform mit drei Schaltstellungen in perspektivischer Darstellung,
- Fig. 3: die drehbare Scheibe der Ansteuerungseinheit der Antriebseinheit von Fig. 2 in der Draufsicht,
- Fig. 4: eine Darstellung der drehbaren Scheibe der Ansteuerungseinheit zur Veranschaulichung der Funktion der Positionserfassungs-Einrichtung und der Endstellung-Schalteinrichtung,
- Fig. 5: die Antriebseinheit einer zweiten Ausführungsform mit fünf Schaltstellungen in perspektivischer Darstellung,
- Fig. 6: die drehbare Scheibe der Ansteuerungseinheit der Antriebseinheit von Fig. 5 in der Draufsicht und
- Fig. 7: eine Darstellung der drehbaren Scheibe der Ansteuerungseinheit zur Veranschaulichung der Funktion der Positionserfassungs-Einrichtung und der Endstellung-Schalteinrichtung.

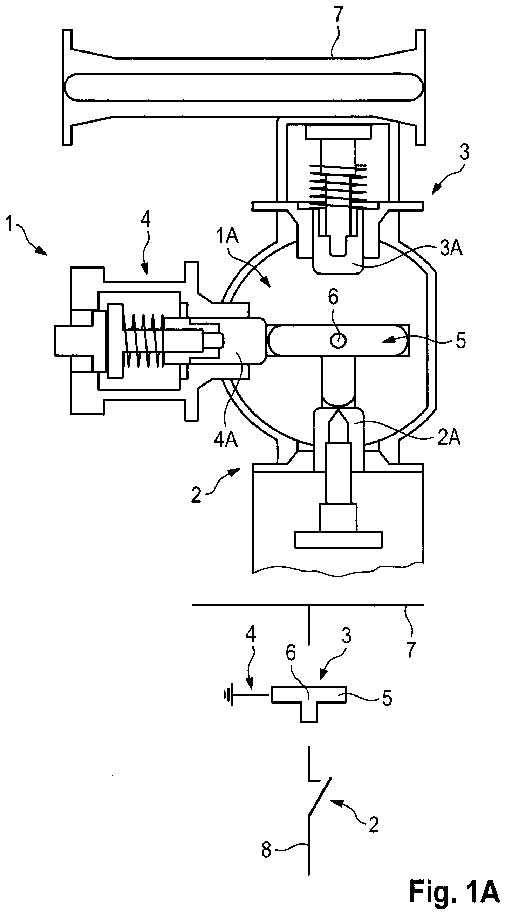

Die Figuren 1A bis 1E zeigen in einer stark vereinfachten schematischen Darstellung eine elektrische Schaltanlage, die in der DE 10 2007 004 950 A1 im Einzelnen beschrieben ist, auf die ausdrücklich Bezug genommen wird. In den Figuren 1A bis 1E sind die einzelnen Schaltstellungen der Schalteinheit dargestellt. Die Schalteinheit 1 weist einen Drehschalter 1A auf, der einen nur andeutungsweise dargestellten Leistungsschalter 2 oder Lasttrennschalter, einen Trennschalter 3 und einen Erdungsschalter 4 umfasst. Die einzelnen Schaltstellungen können durch Rotation einer Schaltkontakt-Anordnung 5 eingenommen werden, die in der DE 10 2007 004 950 A1 als Zentralschalter bezeichnet wird. Die Schaltkontakt-Anordnung 5 ist mit einer Antriebswelle 6 verbunden, die um eine zentrale Achse drehbar gelagert ist.

Fig. 1A zeigt eine Schaltstellung (Drehwinkel 0 °), in der eine elektrische Verbindung zwischen den Anschlusskontakten 2A des Leistungsschalters 2 oder Lasttrennschalters und den Anschlusskontakten 4A des Erdungsschalters 4 hergestellt werden kann, um den Kabelabgang 8 zu erden.

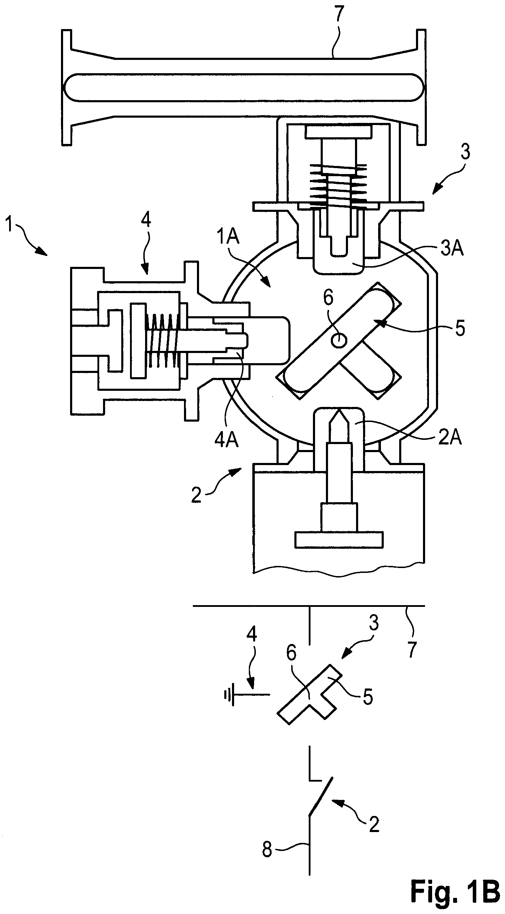

Fig. 1B zeigt die Trennstellung (Drehwinkel: 45 °), in der die elektrische Verbindung zwischen den Anschlusskontakten 2A, 3A, 4A des Leistungsschalters 2 oder Lastschalters, des Trennschalters 3 und des Erdungsschalters 4 unterbrochen ist.

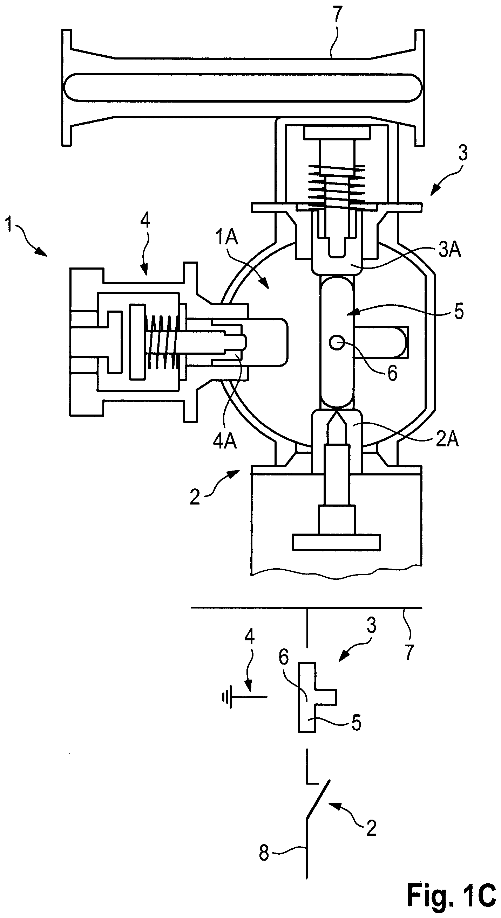

Fig. 1C zeigt die Betriebsstellung (Drehwinkel: 90 °), in der eine elektrische Verbindung zwischen den Anschlusskontakten 2A des Leistungsschalters 2 oder Lasttrennschalters und den Anschlusskontakten 3A des Trennschalters 3 hergestellt werden kann, um die Sammelschiene 7 mit dem Kabelabgang 8 zu verbinden.

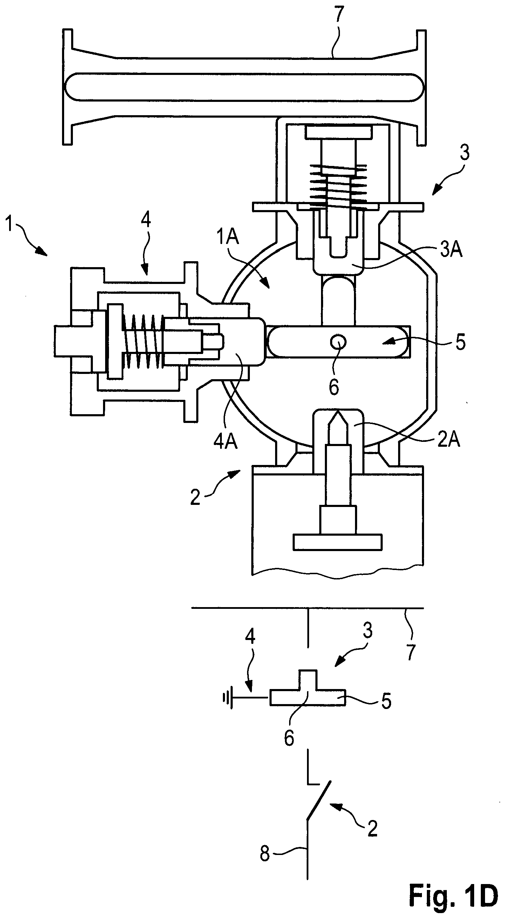

Fig. 1D zeigt eine Schaltstellung (Drehwinkel: 180 °), in der eine elektrische Verbindung zwischen den Anschlusskontakten 3A, 4A des Trennschalters 3 und des Erdungsschalters 4 hergestellt werden kann, um die Sammelschiene 7 zu erden.

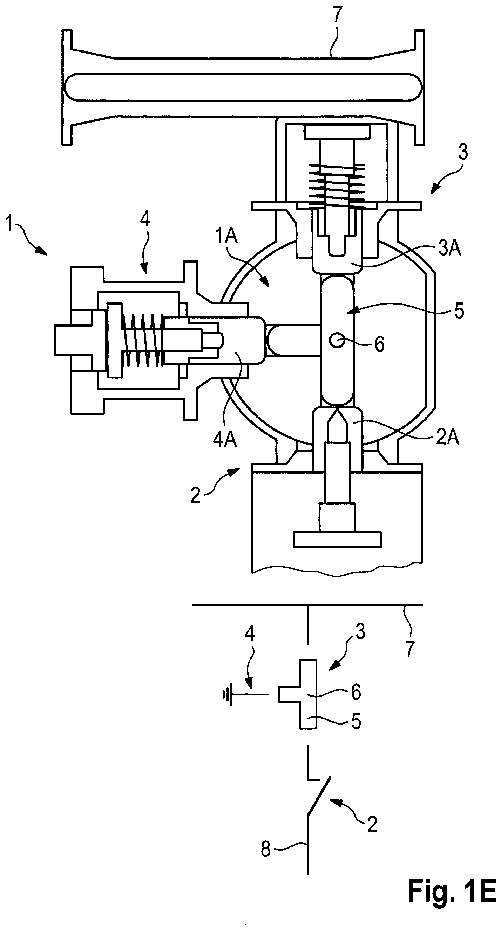

Fig. 1E zeigt eine Schaltstellung (Drehwinkel: 270 °), in der eine elektrische Verbindung zwischen den Anschlusskontakten 2A, 3A, 4A des Leistungsschalters 2 oder Lasttrennschalters, des Trennschalters 3 und des Erdungsschalters 4 hergestellt werden kann, um den Kabelabgang 8 und die Sammelschiene 7 zu erden.

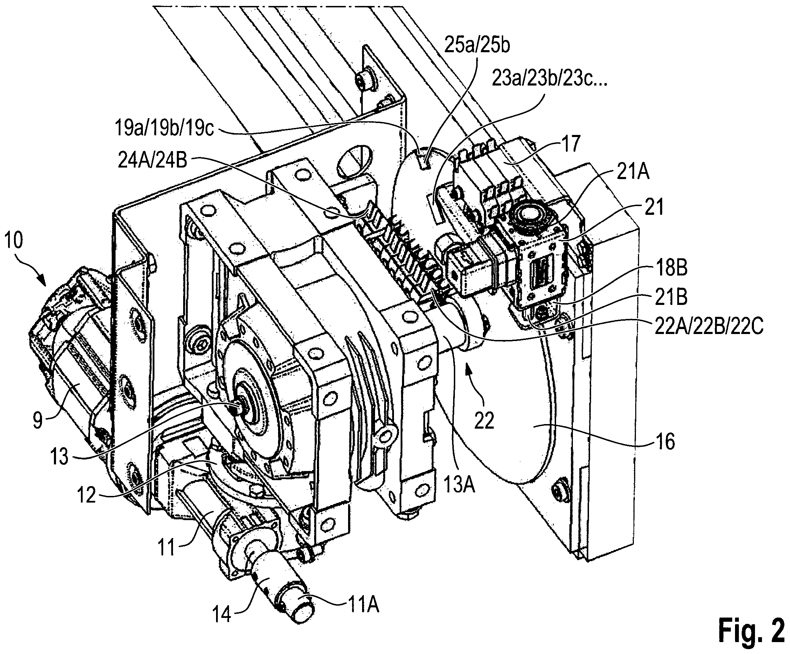

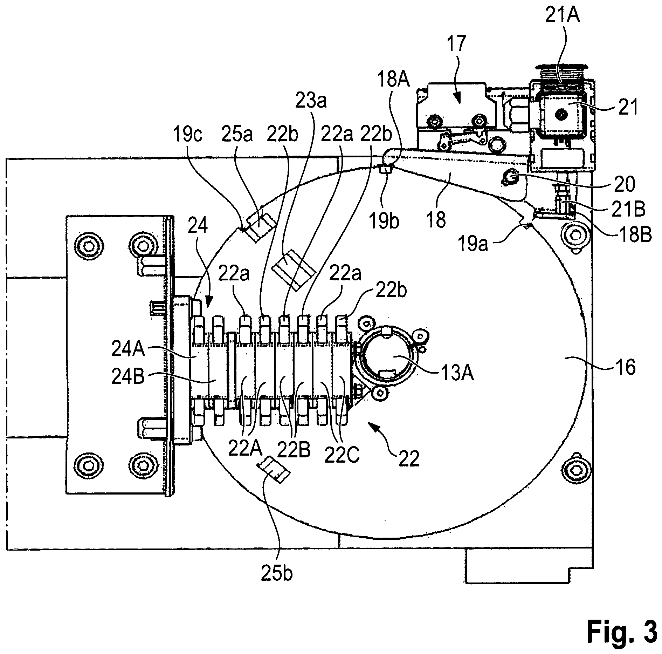

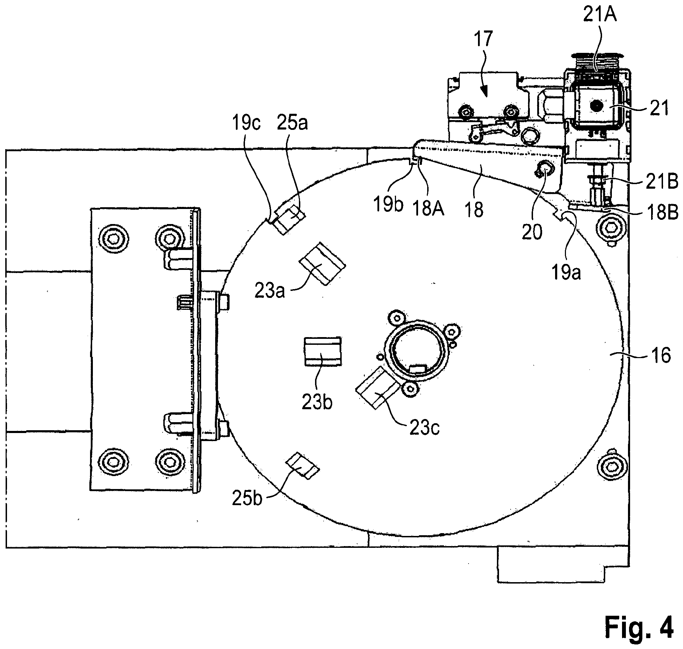

Fig. 2 zeigt die Antriebseinheit 1 zum Drehen des Drehschalters 1A einer ersten Ausführungsform in perspektivischer Darstellung. Diese Ausführungsform sieht die in den Figuren 1A bis 1C gezeigten Schaltstellungen vor (Dreistellungsschalter). Die Figuren 3 und 4 zeigen Teilansichten der Antriebseinheit 10.

Nachfolgend werden nur die für die Erfindung wesentlichen Teile der Antriebseinheit 10 beschrieben. Die Antriebseinheit 10 weist einen Antriebsmotor 9 auf, der bei der vorliegenden Ausführungsform ein Elektromotor ist. Der Antriebsstrang umfasst ein erstes Getriebe 11, dessen Längsachse in einer horizontalen Ebene auf der Achse des Motors 9 liegt, ein zweites Getriebe 12, dessen Längsachse in einer vertikalen Ebene senkrecht zu der Achse des ersten Getriebes 11 verläuft und ein drittes Getriebe 13, dessen Längsachse in einer horizontalen Ebene senkrecht zu der Achse des zweiten Getriebes 12 verläuft. Auf diese Weise können bei Motorspannungen zwischen 48 V DC und 220 V DC oder AC getriebeausgangsseitig die für das Drehen des Drehschalters erforderlichen relativ hohen Drehmomente von bis zu 600 Nm erzeugt werden. An einer Welle 11A des ersten Getriebes 11 ist ein Befestigungsstück 14 für eine Handkurbel vorgesehen, um eine manuelle Bedienung zu ermöglichen.

Die Schalteinheit 1 und die Antriebseinheit 10 sind getrennte bauliche Einheiten, die in räumlicher Nähe zueinander angeordnet sind. Die Abtriebswelle 13A des dritten Getriebes 13 treibt die zentrale Antriebswelle 6 der Schalteinheit 1 an. Bei dem vorliegenden Ausführungsbeispiel ist die Abtriebswelle 13A des dritten Getriebes 13 mit der Antriebswelle 6 der Schalteinheit 1 über ein Zugmittelgetriebe 15, insbesondere ein Kettengetriebe verbunden, das vorzugsweise ein Übersetzungsverhältnis von 1:1 hat (Fig. 4).

Die Antriebseinheit 10 verfügt über eine Ansteuerungseinheit zur Ansteuerung des Antriebsmotors 9, das einen drehbaren Körper 16 aufweist, der mit der Abtriebswelle 13A der Antriebseinheit 1 verbunden ist. Bei dem vorliegenden Ausführungsbeispiel ist der drehbare Körper eine Scheibe 16. Wenn der Antriebsmotor 9 die Abtriebswelle 13A mit der Scheibe 16 um 360° dreht, wird bei dem Übersetzungsverhältnis von 1:1 die Antriebswelle 6 der Schalteinheit 1 ebenfalls um 360° gedreht, so dass sich auch die Schaltkontakt-Anordnung 6 um 360° dreht. Folglich entspricht die Stellung der Scheibe 16 exakt der Schaltstellung des Drehschalters.

Die Ansteuerungseinheit der Antriebseinheit 1 verfügt über ein Schaltorgan 17, das bei dem vorliegenden Ausführungsbeispiel ein elektrischer Schalter 17 zum Ein- und Ausschalten des Elektromotors 9 ist. Bei geschlossenem Schalter 17 ist der Antriebsmotor 9 eingeschaltet und bei geöffnetem Schalter ist der Antriebsmotor ausgeschaltet. Der Schalter 17, der ein Dreiphasenschalter mit mehreren Kontaktpaaren sein kann, wird von einem Betätigungselement 18 betätigt, das als eine Klinke ausgebildet ist, die in Ausnehmungen 19a bis 19c greift, die in vorgegebenen Schaltstellungen umfangsmäßig verteilt an der Umfangsfläche der Scheibe 16 vorgesehen sind. Der vordere Abschnitt des Betätigungselements 18 weist einen in die Ausnehmungen 19a bis 19c greifenden Ansatz 18A und der hintere Abschnitt ein Ansatzstück 18B auf. Der mittlere Abschnitt des Betätigungselements 18 ist um eine horizontale Achse 20 schwenkbar gelagert.
Die Positionen der Ausnehmungen 19a bis 19c am Umfang der Scheibe 16 entsprechen den einzelnen Drehstellungen der Schaltkontakt-Anordnung 5 der Schalteinheit 1, d.h. den Schaltstellungen der Schalteinheit. So schließen beispielsweise die Ausnehmungen 19a und 19b einen Winkel von 45° und die Ausnehmungen 19b und 19c einen Winkel von 45° ein.

Darüber hinaus weist die Ansteuerungseinheit eine Freigabeeinheit 21 auf, mit der das Betätigungselement 18 aus der Position, in der der vordere Ansatz 18A mit der Scheibe 16 im Eingriff ist, um die Achse 20 in eine Position verschwenkt werden kann, in der der vordere Ansatz 18A mit der Scheibe 16 außer Eingriff ist, d.h. die Klinke freigegeben wird. Die Freigabeeinheit 21 weist einen elektromagnetisch betriebenen Antrieb 21A für einen in Längsrichtung verschiebbar geführten Bolzen 21B auf, der an dem hinteren Ansatz 18B des Betätigungselements 18 angreift, so dass das Betätigungselement aus der Eingriffsposition in die Freigabeposition verschwenkt werden kann, um den Schalter 17 zu betätigen. In der Eingriffsposition ist der Schalter 17 geöffnet, so dass der Stromkreis, der den Elektromotor 9 umfasst, unterbrochen ist, während der Schalter 17 in der Freigabeposition geschlossen ist, so dass der Motor 9 eingeschaltet ist.

Des Weiteren verfügt die Ansteuerungseinheit über eine nicht dargestellte Steuerschaltung, die elektrische und elektronische Bauteile, beispielsweise Halbleiter oder Relais aufweisen kann. Zum Schalten der Schalteinheit 1 von einer Schaltstellung in eine andere Schaltstellung, beispielsweise von der Betriebsstellung in die Trennstellung steuert die Ansteuerungseinheit die Freigabeeinheit 21 für ein vorgegebenes Zeitintervall an, so dass das Betätigungselement 18 freigegeben wird und der Schalter geschlossen wird, so dass der Elektromotor 9 eingeschaltet wird. Die Scheibe 16 der Antriebseinheit 10 und die Schaltkontakt-Anordnung 5 der Schalteinheit 1 drehen sich in Abhängigkeit von der Laufrichtung des Motors 9 im oder entgegen des Uhrzeigersinns solange synchron bis die vordere Ansatz 18A des Betätigungselements 18 wieder in die nächste Ausnehmung 19a bis 19c greift. Zu diesem Zeitpunkt stoppt der Motor 9, da die gewünschte Schaltstellung erreicht ist.

Das vorgegebene Zeitintervall für die Freigabe des Betätigungselements 18 ist derart bemessen, dass der Bolzen 21B zurückgezogen wird, bevor der Ansatz 18A des Betätigungselements 18 in die Ausnehmung 19a bis 19c der nächsten Schaltstellung greift. Die Steuerung kann aber auch vorsehen, dass das Zeitintervall länger bemessen wird, beispielsweise das Betätigungselement 18 noch in der Freigabeposition gehalten wird, wenn die nächste Ausnehmung erreicht wird, so dass der Motor 9 erst beim Erreichen der übernächsten Position gestoppt wird. Folglich können einzelne Schaltstellungen übersprungen werden.

Die Ansteuerungseinheit stellt für den ordnungsgemäßen Betrieb der Schaltanlage nicht nur sicher, dass die einzelnen Schaltstellungen exakt eingestellt werden, sondern verhindert auch, dass unzulässige Schaltstellungen eingenommen werden können.

Darüber hinaus verfügt die Ansteuerungseinheit über eine Positionserfassungs-Einrichtung 22, um die einzelnen Schaltstellungen erfassen zu können. Die Positionserfassungs-Einrichtung 22 weist eine Mehrzahl von Schaltstellung-Tastelementen 22A, 22B, 22C auf. Bei dem vorliegenden Ausführungsbeispiel sind an einer Seitenfläche der Scheibe 16 in einer horizontalen Ebene drei Schaltstellung-Tastelemente 22A, 22B, 22C nebeneinanderliegend angeordnet. Den Schaltstellung-Tastelementen 22A, 22B, 22C sind Ausnehmungen 23a, 23b, 23c zugeordnet, die an der gegenüberliegenden Seite der Scheibe 16 auf dem entsprechenden Radius vorgesehen sind, so dass die Tastelemente 22A, 22B, 22C beim Drehen der Scheibe mit den Ausnehmungen 23a, 23b, 23c in Eingriff kommen können oder außer Eingriff sind. Die Schaltstellung-Tastelemente 22A, 22B, 22C können federnd vorgespannte Rollen aufweisen, die auf der Scheibe abrollen können. Die Tastelemente 22A, 22B, 22C betätigen elektrische Schalter bzw. sind als elektrische Schalter ausgebildet. Jedes Tastelement 22A, 22B, 22C kann auch mehrere Taster bzw. Schalter 22a, 22b aufweisen, um die Redundanz zu erhöhen, so dass die Drehstellung der Scheibe 16 auch beim Ausfall eines Tasters bzw. Schalters erfasst werden kann. Bei dem vorliegenden Ausführungsbeispiel weisen die Tastelemente 22A, 22B, 22C jeweils zwei Schalter 22a, 22b bzw. Taster auf, die geschlossen sind, wenn beide Schalter bzw. Taster in die Ausnehmung 23a, 23b, 23c greifen. Ansonsten sind die Schalter geöffnet. Die Motorsteuerung kann aber auch vorsehen, dass die Schalter 22a, 22b bzw. Taster geöffnet sind, wenn beide Schalter bzw. Taster in die Ausnehmung 23a, 23b, 23c greifen und ansonsten geschlossen sind.

Die Ausnehmungen 23a, 23b, 23c für die Schaltstellung-Tastelemente 22A, 22B, 22C sind an der Scheibe 16 derart angeordnet, dass die Stellung der Schalter (Taster) 22a, 22b, wenn der Schalter 17 den Motorkreis in Betriebsstellung, Trennstellung oder Stellung "Kabelabgang geerdet" unterbricht, die dazugehörige Schaltstellung (Betriebsstellung, Trennstellung, Stellung "Kabelabgang geerdet") wiedergeben. Die Stellung der Schalter (Taster) 22a, 22b (offen oder geschlossen) entspricht einer Kodierung für die Drehstellung der Scheibe 16 bzw. die Schaltstellung der Schalteinheit 1. Die Steuerschaltung ist derart konfiguriert, dass die Stellung der Schalter (Taster) ausgewertet wird, um die Position der Scheibe 16 zu erfassen.

Zum Schutz der Betriebsmittel gegen Fehlbedienung und bei einer Störung der Steuerung ist eine Zwangsunterbrechung des Motorkreises vorgesehen. Wenn sich die Scheibe 16 über die gewünschte Schaltstellung hinaus drehen sollte, weil das Betätigungselement 18 nicht in Eingriff mit der Scheibe 16 gelangen sollte, wird der Elektromotor 9 kurz nach dem Überfahren der gewünschten Schaltstellung automatisch abgeschaltet. Hierzu verfügt die Ansteuerungseinheit über eine Endstellung-Schalteinrichtung 24.

Die Endstellung-Schalteinrichtung 24 weist bei dem vorliegenden Ausführungsbeispiel zwei Endstellung-Tastelemente 24A, 24B auf, die neben den Schaltstellung-Tastelementen 22A, 22B, 22C in der horizontalen Ebene angeordnet sind. Die Endstellung-Tastelemente 24A, 24B, die elektrische Schalter (Taster) betätigen bzw. als elektrische Schalter ausgebildet sind, können in Ausnehmungen 25a, 25b greifen, die an der gegenüberliegenden Seitenfläche der Scheibe 16 auf dem entsprechenden Radius vorgesehen sind. Die Ausnehmungen 25a, 25b für die Endstellung-Tastelemente 24A, 24B sind derart angeordnet, dass unmittelbar nach Überfahren der gewünschten Schaltstellung der jeweilige Schalter betätigt wird. Bei dem vorliegenden Ausführungsbeispiel ist der Schalter geschlossen, wenn das Endstellung-Tastelement 24A, 24B nicht in die entsprechende Ausnehmung 25a, 25b greift, und ist geöffnet, wenn das Endstellung-Tastelement 24A, 24B in die Ausnehmung 25a, 25b greift. Die Schalter sind bei dem Ausführungsbeispiel in dem Stromkreis angeordnet, der den Elektromotor 9 umfasst, so dass der Stromkreis unterbrochen und der Motor abgeschaltet wird, wenn das Endstellung-Tastelement 24A, 24B nach dem Überfahren der gewünschten Schaltstellung in die zugehörige Ausnehmung 25a, 25b greifen sollte.

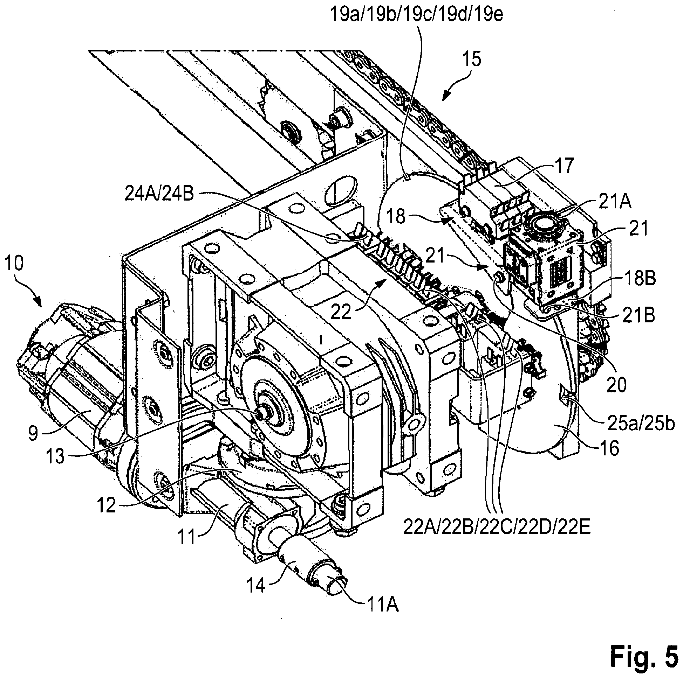

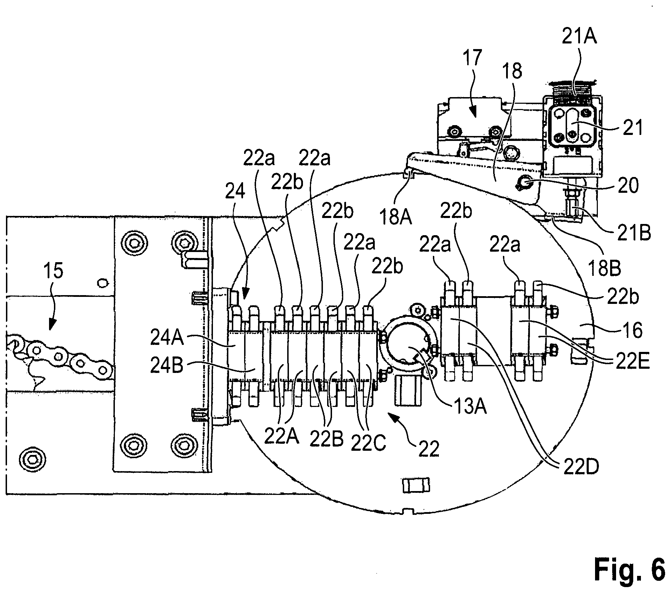

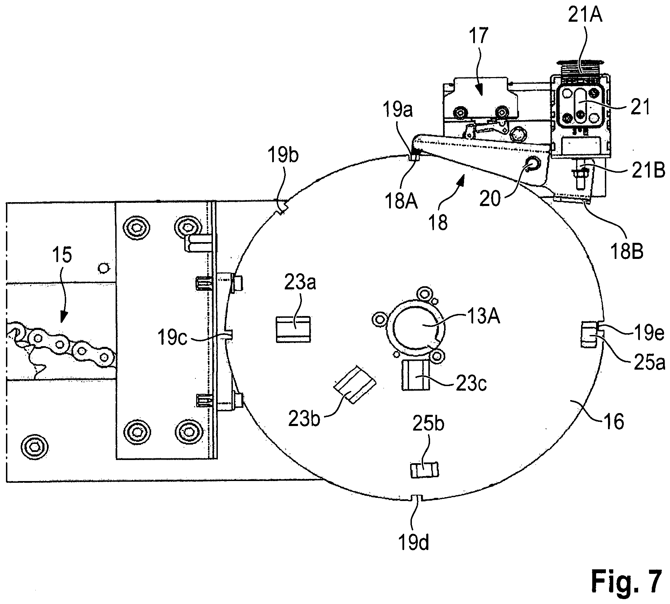

Fig. 5 zeigt die Antriebseinheit 10 zum Drehen des Drehschalters einer zweiten Ausführungsform in perspektivischer Darstellung. Diese Ausführungsform sieht neben den in den Figuren 1A bis 1C gezeigten Schaltstellungen auch die in den Figuren 1D und 1E gezeigten Schaltstellungen vor (Fünfstellungsschalter). Die Figuren 6 und 7 zeigen Teilansichten der Antriebseinheit 10. Die Teile der alternativen Ausführungsform, die denjenigen des unter Bezugnahme auf die Figuren 2 bis 4 beschriebenen Ausführungsbeispiels entsprechen, sind mit den gleichen Bezugszeichen versehen.

Die alternative Ausführungsform unterscheidet sich von dem Ausführungsbeispiel von den Figuren 2 bis 4 dadurch, dass anstelle von drei Ausnehmungen 19a, 19b, 19c an der Umfangsfläche der Scheibe 16 für die drei Schaltstellungen zwei weitere Ausnehmungen 19d, 19e vorgesehen sind, um fünf Schaltstellungen abbilden zu können. Darüber hinaus sind zur Erfassung der zusätzlichen Schaltstellungen zwei weitere Schaltstellung-Tastelemente 22D, 22E vorgesehen, die jeweils zwei Schalter 22a, 22b (Taster) umfassen können.

Wenn die Stellung "Sammelschiene und Kabelabgang geerdet" erreicht ist, fällt das Betätigungselement 18 in die Ausnehmung 19e. Ist die Stellung "Sammelschiene geerdet" erreicht, fällt das Betätigungselement in die Ausnehmung 19d. Die Erfassung der Meldungen für die beiden zusätzlichen Stellungen erfolgt in analoger Weise wie bei dem Dreistellungschalter über das Schaltstellung-Tastelement 22D für die Stellung "Sammelschiene und Kabelabgang geerdet" und das Schaltstellung-Tastelement 22E für die Stellung "Sammelschiene geerdet". Die Schaltstellung-Tastelemente werden dabei wie beim Dreistellungsschalter von den Ausnehmungen 23a, 23b, 23c für die Stellungsmeldungen betätigt bzw. freigegeben. Die Ausnehmungen 23a, 23b, 23c und die Schaltstellung-Tastelemente 22A, 22B sind derart angeordnet, dass für die Kodierung sämtlicher Schaltstellungen die drei Ausnehmungen 23a, 23b, 23c des Dreistellungsschalters an der Seitenfläche der Scheibe 16 ausreichend sind. Die Grundfunktionalitäten und Abläufe des Dreistellungsschalters bleiben erhalten.

## Patentansprüche

1. Hochspannungs- oder Mittelspannungs-Schaltanlage, mit mindestens einer Schalteinheit (1), die einen Drehschalter (1A) und eine Antriebseinheit (10) zum Drehen des Drehschalters (1A) aufweist, wobei die Antriebseinheit (10) einen Antriebsmotor (9) aufweist,
wobei
die Antriebseinheit (10) eine Ansteuerungseinheit zur Ansteuerung des Antriebsmotors (9) aufweist, die derart ausgebildet ist, dass der Drehschalter (1A) beim Betrieb des Antriebsmotors (9) eine Mehrzahl von vorgegebenen Schaltstellungen einnimmt,
die Ansteuerungseinheit ein Schaltorgan (17) zum Ein- bzw. Ausschalten des Antriebsmotors (9) und einen drehbaren Körper (16) und ein mit dem drehbaren Körper (16) zusammenwirkendes Betätigungselement (18) zum Betätigen des Schaltorgans (17) aufweist,
der drehbare Körper (16) derart ausgebildet ist, dass das Betätigungselement (18) in vorgegebenen Drehstellungen des drehbaren Körpers (16), die den vorgegebenen Schaltstellungen des Drehschalters (1A) entsprechen, mit dem drehbaren Körper im Eingriff ist, so dass das Betätigungselement (18) eine erste Stellung einnimmt, in der das Schaltorgan (17) einen ersten Schaltzustand einnimmt, und außerhalb der vorgegebenen Drehstellungen des drehbaren Körpers (16), mit dem drehbaren Körper außer Eingriff ist, so dass das Betätigungselement (18) eine zweite Stellung einnimmt, in der das Schaltorgan (17) einen zweiten Schaltzustand einnimmt, **dadurch gekennzeichnet, dass** die Ansteuerungseinheit eine Freigabeeinheit (21) zum Freigeben des Betätigungselements (18) des Schaltorgans (17) aufweist, wobei die Freigabeeinheit (21) derart ausgebildet ist, dass das Betätigungselement (18) aus einer Position, in der das Betätigungselement (18) mit dem drehbaren Körper (16) im Eingriff ist, in eine Position bringbar ist, in der das Betätigungselement (18) mit dem drehbaren Körper (16) außer Eingriff ist.

2. Hochspannungs- oder Mittelspannungs-Schaltanlage nach Anspruch 1, **dadurch gekennzeichnet, dass** das Betätigungselement (18) um eine Achse (20) schwenkbar ist, wobei die Freigabeeinheit (21) einen in Längsrichtung verschiebbar geführten Bolzen (21B) aufweist, der an dem Betätigungselement (18) derart angreift, dass das Betätigungselement (18) aus der Position, in der das Betätigungselement (18) mit dem drehbaren Körper (16) im Eingriff ist, in die Position verschwenkt wird, in der das Betätigungselement mit dem drehbaren Körper außer Eingriff ist.

3. Hochspannungs- oder Mittelspannungs-Schaltanlage nach Anspruch 2, **dadurch gekennzeichnet, dass** die Ansteuerungseinheit derart ausgebildet ist, dass zum Drehen des Drehschalters (1A) aus einer Schaltstellung in eine andere Schaltstellung die Freigabeeinheit (21) angesteuert wird, wodurch das Betätigungselement (18) mit dem drehbaren Körper (16) außer Eingriff gebracht wird, so dass der Antriebsmotor (9) eingeschaltet wird, wobei der Drehschalter (1A) von dem Antriebsmotor (9) solange gedreht wird bis das Betätigungselement (18) mit dem drehbaren Körper (16) in Eingriff kommt, so dass der Antriebsmotor (9) ausgeschaltet wird.

4. Hochspannungs- oder Mittelspannungs-Schaltanlage nach einem der Ansprüche 1 bis 3, **dadurch gekennzeichnet, dass** der Antriebsmotor ein Elektromotor (9) und das Schaltorgan ein elektrischer Schalter (17) zum Öffnen und Schließen eines Stromkreises ist, der den Antriebsmotor (9) umfasst.

5. Hochspannungs- oder Mittelspannungs-Schaltanlage nach einem der Ansprüche 1 bis 4, **dadurch gekennzeichnet, dass** der drehbare Körper eine Scheibe (16) ist, die auf einer drehbar gelagerten Abtriebswelle (13A) der Antriebseinheit (10) sitzt.

6. Hochspannungs- oder Mittelspannungs-Schaltanlage nach Anspruch 5, **dadurch gekennzeichnet, dass** die Scheibe (16) an der Umfangsfläche umfangsmäßig verteilt angeordnete Ausnehmungen (19a, 19b, 19c, 19d, 19e) aufweist, und das Betätigungselement (18) als eine Klinke ausgebildet ist, die in den vorgegebenen Drehstellungen der Scheibe (16), die den vorgegebenen Schaltstellungen des Drehschalters (1A) entsprechen, in die entsprechenden Ausnehmungen (19a, 19b, 19c, 19d, 19e) greift.

7. Hochspannungs- oder Mittelspannungs-Schaltanlage nach einem der Ansprüche 1 bis 6, **dadurch gekennzeichnet, dass** die Ansteuerungseinheit eine Positionserfassungs-Einrichtung (22) mit einer Mehrzahl von Schaltstellung-Tastelementen (22A, 22B, 22C, 22D, 22E) aufweist, wobei der drehbare Körper (16) derart ausgebildet ist, dass in den vorgegebenen Drehstellungen des drehbaren Körpers (16), die den vorgegebenen Schaltstellungen des Drehschalters (1A) entsprechen, in Abhängigkeit von der Drehstellung einzelne Schaltstellung-Tastelemente (22A, 22B, 22C, 22D, 22E) mit dem drehbaren Körper (16) im Eingriff sind.

8. Hochspannungs- oder Mittelspannungs-Schaltanlage nach Anspruch 7, **dadurch gekennzeichnet, dass** der drehbare Körper (16) an einer Seitenfläche umfangsmäßig verteilt angeordnete Ausnehmungen (23a, 23b, 23c) aufweist, wobei die Schaltstellung-Tastelemente (22A, 22B, 22C, 22D, 22E) in den vorgegebenen Drehstellungen des drehbaren Körpers (16), die den vorgegebenen Schaltstellungen des Drehschalters (1A) entsprechen, in die entsprechenden Ausnehmungen (23a, 23b, 23c) greifen.

9. Hochspannungs- oder Mittelspannungs-Schaltanlage nach Anspruch 7 oder 8, **dadurch gekennzeichnet, dass** die Positionserfassungs-Einrichtung (22) von den Schaltstellung-Tastelementen (22A, 22B, 22C, 22D, 22E) betätigbare elektrische Schalter (22a, 22b) oder Taster aufweist.

10. Hochspannungs- oder Mittelspannungs-Schaltanlage nach einem der Ansprüche 1 bis 9, **dadurch gekennzeichnet, dass** die Ansteuerungseinheit eine Endstellung-Schalteinrichtung (24) mit mindestens einem Endstellung-Tastelement (24A, 24B) aufweist, wobei der drehbare Körper (16) derart ausgebildet ist, dass in einer vorgegebenen Endstellung das Endstellung-Tastelement (24A, 24B) mit dem drehbaren Körper (16) im Eingriff ist.

11. Hochspannungs- oder Mittelspannungs-Schaltanlage nach Anspruch 10, **dadurch gekennzeichnet, dass** der drehbare Körper (16) an einer Seitenfläche umfangsmäßig verteilt angeordnete Ausnehmungen (25a, 25b) aufweist, wobei die Endstellung-Schalteinrichtung (24) von den Endstellung-Tastelementen (24A, 24B) betätigbare Schalter (25a, 25b) oder Taster aufweist.

12. Hochspannungs- oder Mittelspannungs-Schaltanlage nach Anspruch 5 **dadurch gekennzeichnet, dass** die Abtriebswelle (13A) der Antriebseinheit (10) mittels eines Zugmittelgetriebes (15) mit einer Antriebswelle (6) der Schalteinheit (1) verbunden ist, die mit einer um eine zentrale Achse drehbaren Schaltkontakt-Anordnung (5) des Drehschalters verbunden ist.

13. Hochspannungs- oder Mittelspannungs-Schaltanlage nach einem der Ansprüche 1 bis 12, **dadurch gekennzeichnet, dass** der Drehschalter (1A) derart ausgebildet ist, dass in den vorgegebenen Drehstellungen des drehbaren Körpers (16), die den vorgegebenen Schaltstellungen des Drehschalters (1A) entsprechen, elektrische Verbindungen zwischen Anschlusskontakten (2A, 3A, 4A) eines Leistungsschalters (2) oder Lastschalters, eines Trennschalters (3) und eines Erdungsschalters (4) herstellbar sind.

14. Hochspannungs- oder Mittelspannungs-Schaltanlage nach einem der Ansprüche 1 bis 13, **dadurch gekennzeichnet, dass** der Drehschalter (1A) derart ausgebildet ist, dass
in einer Drehstellung eine elektrische Verbindung zwischen den Anschlusskontakten (2A, 4A) des Leistungsschalters (2) oder Lastschalters und des Erdungsschalters (4) hergestellt ist, und/oder
in einer Drehstellung eine elektrische Verbindung zwischen den Anschlusskontakten (2A, 3A, 4A) des Leistungsschalters (2) oder Lastschalters, des Trennschalters (3) und des Erdungsschalters (4) unterbrochen ist, und/oder in einer Drehstellung eine elektrische Verbindung zwischen den Anschlusskontakten (2A, 3A) des Leistungsschalters (2) oder Lastschalters und des Trennschalters (3) hergestellt ist, und/oder
in einer Drehstellung eine elektrische Verbindung zwischen den Anschlusskontakten (3A, 4A) des Trennschalters (3) und des Erdungsschalters (4) hergestellt ist, und/oder
in einer Drehstellung eine elektrische Verbindung zwischen den Anschlusskontakten (2A, 3A, 4A) des Leistungsschalters (2) oder Lastschalters, des Trennschalters (3) und des Erdungsschalters (4) und hergestellt ist.

## Claims

1. High-voltage or medium-voltage switching system comprising at least one switching unit (1), which has a rotary switch (1A) and a drive unit (10) for rotating the rotary switch (1A), the drive unit (10) comprising a drive motor (9),
the drive unit (10) comprising an actuation unit for actuating the drive motor (9), which is formed in such a way that when the drive motor (9) is operated the rotary switch (1A) adopts a plurality of predetermined switching positions,
the actuation unit comprising a switching member (17) for switching the drive motor (9) on and off and a rotatable body (16), as well as an activation element (18), which cooperates with the rotatable body (16), for activating the switching member (17), and
the rotatable body (16) being formed in such a way that in predetermined rotational positions of the rotatable body (16), which correspond to the predetermined switching positions of the rotary switch (1A), the activation element (18) is engaged with the rotatable body, in such a way that the activation element (18) adopts a first position, in which the switching member (17) adopts a first switching state, and outside the predetermined rotational positions of the rotatable body (16) it is disengaged from the rotatable body, in such a way that the activation element (18) adopts a second position, in which the switching member (17) adopts a second switching state,
**characterised in that**
the actuation unit comprises a release unit (21) for releasing the activation element (18) of the switching member (17), the release unit (21) being formed in such a way that the activation element (18) can be brought from a position in which the activation element (18) is engaged with the rotatable body (16) into a position in which the activation element (18) is disengaged from the rotatable body (16).

2. High-voltage or medium-voltage switching system according to claim 1, **characterised in that** the activation element (18) is pivotable about an axis (20), the release unit (21) having a bolt (21B) which is guided displaceably in the longitudinal direction and which acts on the activation element (18) in such a way that the activation element (18) is pivoted from the position in which the activation element (18) is engaged with the rotatable body (16) into the position in which the activation element is disengaged from the rotatable body.

3. High-voltage or medium-voltage switching system according to claim 2, **characterised in that** the actuation unit is formed in such a way that, to rotate the rotary switch (1A) from one switching position into another switching position, the release unit (21) is actuated, causing the activation element (18) to be disengaged from the rotatable body (16), in such a way that the drive motor (9) is switched on, the rotary switch (1A) being rotated by the drive motor (9) until the activation element (18) comes into engagement with the rotatable body (16), in such a way that the drive motor (9) is switched off.

4. High-voltage or medium-voltage switching system according to any of claims 1 to 3, **characterised in that** the drive motor is an electric motor (9) and the switching member is an electrical switch (17) for opening and closing a circuit which includes the drive motor (9).

5. High-voltage or medium-voltage switching system according to any of claims 1 to 4, **characterised in that** the rotatable body is a disc (16) which is positioned on a rotatably mounted driven shaft (13A) of the drive unit (10).

6. High-voltage or medium-voltage switching system according to claim 5, **characterised in that** the disc (16) has recesses (19a, 19b, 19c, 19d, 19e) arranged circumferentially distributed on the circumferential face, and the activation element (18) is formed as a latch which engages in the corresponding recesses (19a, 19b, 19c, 19d, 19e) in the predetermined rotational positions of the disc (16) which correspond to the predetermined switching positions of the rotary switch (1A).

7. High-voltage or medium-voltage switching system according to any of claims 1 to 6, **characterised in that** the actuation unit has a position detection means (22) comprising a plurality of switching position sensor elements (22A, 22B, 22C, 22D, 22E), the rotatable body (16) being formed in such a way that, in the predetermined rotational positions of the rotatable body (16) which correspond to the predetermined switching positions of the rotary switch (1A), individual switching position sensor elements (22A, 22B, 22C, 22D, 22E) are engaged with the rotatable body (16) depending on the rotational position.

8. High-voltage or medium-voltage switching system according to claim 7, **characterised in that** the rotatable body (16) has recesses (23a, 23b, 23c) arranged circumferentially distributed on a side face, the switching position sensor elements (22A, 22B, 22C, 22D, 22E) engaging in the corresponding recesses (23a, 23b, 23c) in the predetermined rotational positions of the rotatable body (16) which correspond to the predetermined switching positions of the rotary switch (1A).

9. High-voltage or medium-voltage switching system according to either claim 7 or claim 8, **characterised in that** the position detection means (22) has electrical switches (22a, 22b) or buttons which can be actuated by the switching position sensor elements (22A, 22B, 22C, 22D, 22E).

10. High-voltage or medium-voltage switching system according to any of claims 1 to 9, **characterised in that** the actuation unit has an end position switching means (24) comprising at least one end position sensor element (24A, 24B), the rotatable body (16) being formed in such a way that in a predetermined end position the end position sensor element (24A, 24B) is engaged with the rotatable body (16).

11. High-voltage or medium-voltage switching system according to claim 10, **characterised in that** the rotatable body (16) has recesses (25a, 25b) arranged circumferentially distributed on a side face, the end position switching means (24) having switches (25a, 25b) or buttons which can be activated by the end position sensor elements (24A, 24B).

12. High-voltage or medium-voltage switching system according to claim 5, **characterised in that** the driven shaft (13A) of the drive unit (10) is connected using a traction drive (15) to a drive shaft (6) of the switch unit (1), which is connected to a switch contact arrangement (5), which is rotatable about a central axis, of the rotary switch.

13. High-voltage or medium-voltage switching system according to any of claims 1 to 12, **characterised in that** the rotary switch (1A) is formed in such a way that, in the predetermined rotational positions of the rotatable body (16) which correspond to the predetermined switching positions of the rotary switch (1A), electrical connections between terminal contacts (2A, 2A, 4A) of a power switch (2) or load switch, of a disconnect switch (3) and of an earthing switch (4) can be established.

14. High-voltage or medium-voltage switching system according to any of claims 1 to 13, **characterised in that** the rotary switch (1A) is formed in such a way that
in one rotational position an electrical connection between the terminal contacts (2A, 4A) of the power switch (2) or load switch and of the earthing switch (4) is established, and/or
in one rotational position an electrical connection between the terminal contacts (2A, 3A, 4A) of the power switch (2) or load switch, of the disconnect switch (3) and of the earthing switch (4) is interrupted, and/or
in one rotational position an electrical connection between the terminal contacts (2A, 3A) of the power switch (2) or load switch and of the disconnect switch (3) is established, and/or
in one rotational position an electrical connection between the terminal contacts (3A, 4A) of the disconnect switch (3) and of the earthing switch (4) is established, and/or
in one rotational position an electrical connection between the terminal contacts (2A, 3A, 4A) of the power switch (2) or load switch, of the disconnect switch (3) and of the earthing switch (4) is established.

## Revendications

1. Installation de commutation haute tension ou moyenne tension, avec au moins une unité de commutation (1), qui présente un commutateur rotatif (1A) et une unité d'entraînement (10) pour faire tourner le commutateur rotatif (1A), dans laquelle l'unité d'entraînement (10) présente un moteur d'entraînement (9),
dans laquelle
l'unité d'entraînement (10) présente une unité de pilotage pour piloter le moteur d'entraînement (9), qui est réalisée de telle manière que le commutateur rotatif (1A) adopte lors du fonctionnement du moteur d'entraînement (9) une multitude de positions de commutation prédéfinies,
l'unité de pilotage présente un organe de commutation (17) pour activer ou désactiver le moteur d'entraînement (9) et un corps rotatif (16) et un élément d'actionnement (18) coopérant avec le corps rotatif (16) pour actionner l'organe de commutation (17),
le corps rotatif (16) est réalisé de telle manière que l'élément d'actionnement (18) est en prise avec le corps rotatif dans des positions de rotation prédéfinies du corps rotatif (16), qui correspondent aux positions de commutation prédéfinies du commutateur rotatif (1A), de sorte que l'élément d'actionnement (18) adopte une première position, dans laquelle l'organe de commutation (17) adopte un premier état de commutation et, n'est pas en prise avec le corps rotatif en dehors des positions de rotation prédéfinies du corps rotatif (16) de sorte que l'élément d'actionnement (18) adopte une deuxième position, dans laquelle l'organe de commutation (17) adopte un deuxième état de commutation,
**caractérisée en ce que**
l'unité de pilotage présente une unité de déblocage (21) pour débloquer l'élément d'actionnement (18) de l'organe de commutation (17), dans lequel l'unité de déblocage (21) est réalisée de telle manière que l'élément d'actionnement (18) peut être amené, depuis une position dans laquelle l'élément d'actionnement (18) est en prise avec le corps rotatif (16), dans une position dans laquelle l'élément d'actionnement (18) n'est pas en prise avec le corps rotatif (16).

2. Installation de commutation haute tension ou moyenne tension selon la revendication 1, **caractérisée en ce que** l'élément d'actionnement (18) peut pivoter autour d'un axe (20), dans laquelle l'unité de déblocage (21) présente un boulon (21 B) guidé de manière à pouvoir coulisser dans le sens longitudinal, qui s'engage de telle manière sur l'élément d'actionnement (18) que l'élément d'actionnement (18) est pivoté, depuis la position dans laquelle l'élément d'actionnement (18) est en prise avec le corps rotatif (16), dans la position dans laquelle l'élément d'actionnement n'est pas en prise avec le corps rotatif.

3. Installation de commutation haute tension ou moyenne tension selon la revendication 2, **caractérisée en ce que** l'unité de pilotage est réalisée de telle manière que pour faire tourner le commutateur rotatif (1A) depuis une position de commutation dans une autre position de commutation, l'unité de déblocage (21) est pilotée, ce qui a pour effet que l'élément d'actionnement (18) est amené hors prise avec le corps rotatif (16) de sorte que le moteur d'entraînement (9) est activé, le commutateur rotatif (1A) étant tourné par le moteur d'entraînement (9) jusqu'à ce que l'élément d'actionnement (18) vienne en prise avec le corps rotatif (16) de sorte que le moteur d'entraînement (9) est désactivé.

4. Installation de commutation haute tension ou moyenne tension selon l'une quelconque des revendications 1 à 3, **caractérisée en ce que** le moteur d'entraînement est un moteur électrique (9) et l'organe de commutation est un interrupteur (17) électrique pour ouvrir et fermer un circuit électrique qui comprend le moteur d'entraînement (9).

5. Installation de commutation haute tension ou moyenne tension selon l'une quelconque des revendications 1 à 4, **caractérisée en ce que** le corps rotatif est un disque (16) qui repose sur un arbre de sortie (13A) de l'unité d'entraînement (10) monté de manière rotative.

6. Installation de commutation haute tension ou moyenne tension selon la revendication 5, **caractérisée en ce que** le disque (16) présente des évidements (19a, 19b, 19c, 19d, 19e) disposés de manière répartie en périphérie sur la surface périphérique et l'élément d'actionnement (18) est réalisé en tant que loquet qui s'engage dans les évidements (19a, 19b, 19c, 19d, 19e) correspondants dans les positions de rotation prédéfinies du disque (16), qui correspondent aux positions de commutation prédéfinies du commutateur rotatif (1A).

7. Installation de commutation haute tension ou moyenne tension selon l'une quelconque des revendications 1 à 6, **caractérisée en ce que** l'unité de pilotage présente un dispositif de détection de position (22) avec une multitude d'éléments palpeurs de position de commutation (22A, 22B, 22C, 22D, 22E), dans laquelle le corps rotatif (16) est réalisé de telle manière que divers éléments palpeurs de position de commutation (22A, 22B, 22C, 22D, 22E) sont en prise avec le corps rotatif (16) dans les positions de rotation prédéfinies du corps rotatif (16), qui correspondent aux positions de commutation prédéfinies du commutateur rotatif (1A), en fonction de la position de rotation.

8. Installation de commutation haute tension ou moyenne tension selon la revendication 7, **caractérisée en ce que** le corps rotatif (16) présente des évidements (23a, 23b, 23c) disposés de manière répartie en périphérie sur une surface latérale, dans laquelle les éléments palpeurs de position de commutation (22A, 22B, 22C, 22D, 22E) s'engagent dans les évidements (23a, 23b, 23c) correspondants dans les positions de rotation prédéfinies du corps rotatif (16), qui correspondent aux positions de commutation prédéfinies du commutateur rotatif (1A).

9. Installation de commutation haute tension ou moyenne tension selon la revendication 7 ou 8, **caractérisée en ce que** le dispositif de détection de position (22) présente des interrupteurs (22a, 22b) électriques ou des boutons-poussoirs pouvant être actionnés par les éléments palpeurs de position de commutation (22A, 22B, 22C, 22D, 22E).

10. Installation de commutation haute tension ou moyenne tension selon l'une quelconque des revendications 1 à 9, **caractérisée en ce que** l'unité de pilotage présente un dispositif de commutation de position finale (24) avec au moins un élément palpeur de position finale (24A, 24B), dans laquelle le corps rotatif (16) est réalisé de telle manière que dans une position finale prédéfinie, l'élément palpeur de position finale (24A, 24B) est en prise avec le corps rotatif (16).

11. Installation de commutation haute tension ou moyenne tension selon la revendication 10, **caractérisée en ce que** le corps rotatif (16) présente des évidements (25a, 25b) disposés de manière répartie en périphérie sur une surface latérale, dans laquelle le dispositif de commutation de position finale (24) présente des interrupteurs (25a, 25b) ou des boutons-poussoirs pouvant être actionnés par les éléments palpeurs de position finale (24A, 24B).

12. Installation de commutation haute tension ou moyenne tension selon la revendication 5, **caractérisée en ce que** l'arbre de sortie (13A) de l'unité d'entraînement (10) est relié, au moyen d'un engrenage à moyen de traction (15), à un arbre d'entraînement (6) de l'unité de commutation (1) qui est relié à un ensemble commutation-contact (5), pouvant tourner autour d'un axe central, du commutateur rotatif.

13. Installation de commutation haute tension ou moyenne tension selon l'une quelconque des revendications 1 à 12, **caractérisée en ce que** le commutateur rotatif (1A) est réalisé de telle manière que dans les positions de rotation prédéfinies du corps rotatif (16), qui correspondent aux positions de commutation prédéfinies du commutateur rotatif (1A), des liaisons électriques peuvent être établies entre des contacts de raccordement (2A, 3A, 4A) d'un interrupteur à coupure en puissance (2) ou d'un interrupteur à coupure en charge, d'un sectionneur (3) et d'un interrupteur de mise à la terre (4).

14. Installation de commutation haute tension ou moyenne tension selon l'une quelconque des revendications 1 à 13, **caractérisée en ce que** le commutateur rotatif (1A) est réalisé de telle manière que
dans une position de rotation, une liaison électrique est établie entre les contacts de raccordement (2A, 4A) de l'interrupteur à coupure de puissance (2) ou de l'interrupteur à coupure en charge et de l'interrupteur de mise à la terre (4), et/ou dans une position de rotation, une liaison électrique est interrompue entre les contacts de raccordement (2A, 3A, 4A) de l'interrupteur à coupure de puissance (2) ou de l'interrupteur à coupure de charge, du sectionneur (3) et de l'interrupteur de mise à la terre (4), et/ou
dans une position de rotation, une liaison électrique est établie entre les contacts de raccordements (2A, 3A) de l'interrupteur à coupure en puissance (2) ou de l'interrupteur à coupure en charge et du sectionneur (3), et/ou dans une position de rotation, une liaison électrique est établie entre les contacts de raccordement (3A, 4A) du sectionneur (3) et de l'interrupteur de mise à la terre (4), et/ou
dans une position de rotation, une liaison électrique est établie entre les contacts de raccordement (2A, 3A, 4A) de l'interrupteur à coupure en puissance (2) ou de l'interrupteur à coupure en charge, du sectionneur (3) et de l'interrupteur de mise à la terre (4).
